# EUROPÄISCHE PATENTSCHRIFT

(11) **EP 2 069 761 B1**
(45) Veröffentlichungstag und Bekanntmachung des Hinweises auf die Patenterteilung: **05.10.2022**
(21) Anmeldenummer: 07788349.4
(22) Anmeldetag: 09.08.2007
(51) Int. Cl.: G02B 21/16, G01N 21/64

(54) **VERFAHREN UND VORRICHTUNG ZUM HOCHAUFGELÖSTEN OPTISCHEN ABTASTEN EINER PROBE**
METHOD AND APPARATUS FOR THE HIGHLY RESOLVED OPTICAL SCANNING OF A SAMPLE
PROCÉDÉ ET DISPOSITIF DE PALPAGE OPTIQUE À HAUTE RÉSOLUTION D'UN ÉCHANTILLON

(30) Priorität: 07.10.2006 DE 102006047816
(43) Veröffentlichungstag der Anmeldung: 17.06.2009
(73) Patentinhaber: Leica Microsystems CMS GmbH, 35578 Wetzlar (DE)
(72) Erfinder: GUGEL, Hilmar, 69221 Dossenheim (DE)
(74) Vertreter: Hoffmann, Jürgen
(86) Internationale Anmeldenummer: PCT/EP2007/058291
(87) Internationale Veröffentlichungsnummer: WO 2008/040590

(56) Entgegenhaltungen:
- WO-A-2005/040771
- DE-A1- 10 313 138
- DE-A1-102006 011 556
- US-A- 5 528 045
- US-A- 5 952 668
- STEFAN W HELL: "Toward fluorescence nanoscopy" NATURE BIOTECHNOLOGY, Bd. 21, Nr. 11, 31. Oktober 2003 (2003-10-31), Seiten 1347-1355, XP002458686
- T. LACOSTE, X. MICHALET, F. PINAUD, D. CHEMLA, P. ALIVISATOS, S. WEISS: "ultrahigh-resolution multicolor colocalization of single fluorescent probes" PNAS, Bd. 97, Nr. 17, 15. August 2000 (2000-08-15), Seiten 9461-9466, XP002458687
- Katrin I Willig ET AL: "Nanoscale resolution in GFP-based microscopy", Nature Methods, vol. 3, no. 9, 1 September 2006 (2006-09-01), pages 721-723, XP055489746, New York ISSN: 1548-7091, DOI: 10.1038/nmeth922
- WESTPHAL V ET AL: "Laser-diode-stimulated emission depletion microscopy", APPLIED PHYSICS LETTERS, A I P PUBLISHING LLC, US, vol. 82, no. 18, 5 May 2003 (2003-05-05), pages 3125-3127, XP012033972, ISSN: 0003-6951, DOI: 10.1063/1.1571656
- Haseloff Jim ET AL: "Live imaging with green fluorescent protein" In: "Confocal Microscopy Methods and Protocols (Methods in Molecular Biology, volume 122)", 28 February 1999 (1999-02-28), Humana Press, XP055828151, ISBN: 978-1-59259-722-2 pages 241-259, DOI: https://doi.org/10.1385/159259722X,
- Nn: "Fluorescence SpectraViewer (ThermoFisher Scientific)", , 27 August 2019 (2019-08-27), XP055828158, Retrieved from the Internet: URL:https://www.thermofisher.com/de/de/hom e/life-science/cell-analysis/labelingchemi stry/fluorescence-spectraviewer.html [retrieved on 2021-07-27]
- C. Greb: "Fluorescent Proteins: Introduction and Photo Spectral Characteristics", , 9 March 2012 (2012-03-09), Retrieved from the Internet: URL:https://www.leica-microsystems.com/sci ence-lab/fluorescent-proteins-introduction -and-photo-spectral-characteristics/ [retrieved on 2021-08-30]

## Beschreibung

Die Erfindung betrifft ein Verfahren zum hochaufgelösten optischen Abtasten einer Probe gemäss dem Anspruch 1.

Des Weiteren betrifft die Erfindung eine Vorrichtung gemäss dem Anspruch 8.

Verfahren und Vorrichtungen der hier in Rede stehenden Art sind seit einiger Zeit aus der Praxis bekannt und werden bspw. im Rahmen der STED-Mikroskopie eingesetzt. Mit den in Rede stehenden abbildenden optischen Verfahren und Vorrichtungen lassen sich räumliche Auflösungen jenseits der theoretischen Grenze erzielen, die gemäß dem Abbe'schen Gesetz durch die von der Wellenlänge des verwendeten Lichts abhängige Beugungsgrenze bestimmt wird.

Im Rahmen der STED-Mikroskopie wird dazu eine Substanz in der zu untersuchenden Probe bereitgestellt, die durch Licht in einen angeregten Zustand versetzbar ist und aus diesem angeregten Zustand schlagartig abgeregt werden kann. Bei der STED-Mikroskopie werden als derartige Substanzen ganz überwiegend Fluoreszenzfarbstoffe eingesetzt. Im Allgemeinen wird die Substanz zunächst mit kurzwelligem Licht, bspw. durch einen grünen Laserpuls, in den angeregten Zustand überführt. Sodann wird die Substanz in einem Fokusrandbereich der Anregung mittels eines langwelligen (bspw. roten) Laserpulses gezielt abgeregt. Um eine Abregung der Substanz ausschließlich im Fokusrandbereich zu erreichen, wird die Abregungs-Punktfunktion speziell geformt. Hierzu werden im Allgemeinen Phasenfilter eingesetzt, die sich im Strahlengang des langwelligen Laserstrahls befinden und die Wellenfront des Abregungslichtstrahls ortabhängig verändern. Entscheidend ist, dass der durch den Abregungslichtstrahl induzierte Übergang von dem angeregten in den abgeregten Zustand im Randbereich gesättigt, d.h. vollständig, stattfindet, so dass lediglich in einem (prinzipiell beliebig) kleinen zentralen Bereich die Substanz im angeregten Zustand verbleibt. Auf diese Weise wird mit dem Abregungslichtpuls eine Emission von Fluoreszenzlicht aus dem Randbereich des beugungsbegrenzten Anregungsflecks verhindert. Das detektierte Fluoreszenzlicht stammt somit aus einem eng definierten Probenbereich, dessen Durchmesser aufgrund der Sättigung der Abregung wesentlich kleiner sein kann als nach dem Abbe'schen Gesetz zulässig.

Die STED-Mikroskopie wird - ebenso wie alle anderen bekannten Verfahren, bei denen durch Sättigung eines abgeregten Zustands eine Auflösungserhöhung erzielt wird - im Einfarbenmodus betrieben. Das bedeutet, dass in der Probe nur eine Substanz, bspw. nur ein einzelner Fluoreszenzfarbstoff, bereitgestellt wird. In der Konfokalmikroskopie ist es demgegenüber üblich, mehrere unterschiedliche Fluoreszenzfarbstoffe in der Probe bereitzustellen und mehrfarbige Aufnahmen der Probe anzufertigen. Auf diese Weise ist es möglich, gleichzeitig unterschiedliche Prozesse in der Probe zu untersuchen. Mit Mehrfarbenaufnahmen im Rahmen der herkömmlichen Mikroskopie können demzufolge wesentlich mehr Informationen (wenngleich mit geringerer Auflösung) erlangt werden, als dies mit den bekannten räumlich hochaufgelösten Abbildungsverfahren bislang möglich ist.

Stefan W Hell: "Toward fluorescence nanoscopy" NATURE BIOTECHNOLOGY, Bd. 21, Nr. 11, 31. Oktober 2003 (2003-10-31), Seiten 1347-1355, XP002458686 offenbart ein Verfahren zum hochaufgelösten optischen Abtasten einer Probe, unter Verwendung eines Laser-Raster-Fluoreszenzmikroskops. Die Probe umfasst eine Substanz, die in unterschiedliche Energiezustände versetzbar ist.

T. LACOSTE, X. MICHALET, F. PINAUD, D. CHEMLA, P. ALIVISATOS, S. WEISS: "ultrahigh-resolution multicolor colocalization of single fluorescent probes" PNAS, Bd. 97, Nr. 17, 15. August 2000 (2000-08-15), Seiten 9461-9466, XP002458687 offenbart ein nicht auf STED basierendes Verfahren zur Multifarbenanalyse.

WO 2005/040771 A offenbart Verfahren zum optischen Abtasten einer Probe, wobei die Probe wenigstens zwei fluoreszierende Substanzen aufweist.

DE 10 2006 011 556 A1 offenbart ein Verfahren zum hochaufgelösten optischen Abtasten einer Probe. Die Probe weist zwei Substanzen auf, die in einen angeregten und einen abgeregten Zustand überführbar sind.

Katrin I Willig et al, "Nanoscale resolution in GFP-based microscopy", Nature Methods, Vol. 3, No. 9, Sep. 2006, Seiten 721 bis 723, offenbart die Verwendung eines GFP-basierten Farbstoffs in der STED-Mikroskopie. In einem Ausblick erwähnt der Artikel Multicolor-STED.

Der vorliegenden Erfindung liegt nunmehr die Aufgabe zugrunde, ein Verfahren sowie eine Vorrichtung der eingangs genannten Art anzugeben, wonach mit konstruktiv einfachen und kostengünstigen Mitteln eine hohe räumliche Auflösung jenseits der Beugungsgrenze bei gleichzeitig hoher Informationsausbeute realisiert ist.

Die Aufgabe wird durch ein Verfahren gemäß Anspruch 1 gelöst.

Die voranstehende Aufgabe ist des Weiteren durch eine Vorrichtung mit den Merkmalen des Patentanspruchs 8 gelöst.

In erfindungsgemäßer Weise ist zunächst erkannt worden, dass sich die beim hochaufgelösten optischen Abtasten einer Probe ergebenden Informationen erhöht werden können, indem eine mehrfarbige Aufnahme der Probe angefertigt wird. In erfindungsgemäßer Weise wird dazu wenigstens eine weitere Substanz in der Probe bereitgestellt, wie im Anspruch 1 definiert ist.

Die erfindungsgemäße Auswahl der Substanzen, wonach sich diese hinsichtlich ihre Absorptionsspektren voneinander unterscheiden, wird dazu genutzt, um die beiden Substanzen voneinander zu trennen. Die weiter erfindungsgemäße zumindest teilweise Übereinstimmung hinsichtlich der Emissionsspektren ermöglicht eine besonders einfache Konstruktion, sie ermöglicht nämlich, dieselben Bauteile bzw. Baugruppen, wie bspw. Beleuchtungslichtquellen oder Detektoreinrichtungen, für mehrere Substanzen gemeinsam zu verwenden.

Des Weiteren ist erkannt worden, dass eine simultane Anregung und eine simultane Abregung mehrerer Substanzen dazu führen kann, dass Abregungslicht der einen Substanz zu einer Anregung einer anderen Substanz führen kann. Aufgrund der hohen Leistung, mit der das Abregungslicht zur Erzeugung eines gesättigten Übergangs in den abgeregten Zustand eingestrahlt werden muss, wird eine durch eine Abregungswellenlänge angeregte Substanz sehr schnell gebleicht und steht demzufolge für eine Aufnahme nicht mehr zur Verfügung.

Es sei an dieser Stelle ganz besonders hervorgehoben, dass im Rahmen der vorliegenden Erfindung die Begriffe "Anregungsspektrum" bzw. "Anregungswellenlänge" und "Abregungsspektrum" bzw. "Abregungswellenlänge" nicht eng zu verstehen sind und die Erfindung keineswegs auf die stimulierte Emission beschränkt ist. Vielmehr bezieht sich die Erfindung auf alle Verfahren, bei denen eine Auflösungserhöhung durch Sättigung eines reversiblen Molekülübergangs erzeugt wird. Hierzu zählt bspw. auch der Einsatz photoschaltbarer bzw. photokonvertierbarer Proteine, die durch Einstrahlen von Licht bestimmter Wellenlängen zwischen fluoreszierenden und nicht fluoreszierenden Zuständen umgeschaltet werden können. Das An- und Ausschalten der Fluoreszenz wird dabei vorzugsweise durch unterschiedliche Wellenlängenbänder bewirkt, so dass durch Sättigung des ausgeschalteten Zustands eine Auflösungserhöhung erzielt werden kann. Ganz allgemein werden diese Arten von hochaufgelösten optischen Abbildungsverfahren als RESOLFT-Verfahren bezeichnet. Neben einem Einsatz der Erfindung in der STED-Mikroskopie, kann die Erfindung zudem in der STED-4Pi-Mikroskopie, der Up-Conversion-Mikroskopie sowie im Rahmen der Ground-State-Depletion (GSD) eingesetzt werden.

Substanzen sind derart ausgewählt, dass sich die Abregungsspektren der Substanzen aneinander zumindest teilweise überlappen, so dass die Substanzen mit derselben Wellenlänge in den zweiten Zustand überführt werden können. In konstruktiver Hinsicht erweist es sich in diesem Zusammenhang als vorteilhaft, für die Überführung der Substanzen in den zweiten Zustand lediglich eine gemeinsame Beleuchtungslichtquelle vorzusehen. Da die zur stimulierten Abregung eingesetzten Beleuchtungslichtquellen im Allgemeinen hohe Lichtleistungen liefern müssen und dementsprechend teuer sind, können auf diese Weise erhebliche Kosten eingespart werden. Die Anregungsspektren sind in diesem Fall für die Substanzen unterschiedlich, so dass die Substanzen getrennt voneinander mit jeweils unterschiedlichen Wellenlängen anregbar sind.

In vorteilhafter Weise handelt es sich bei dem ersten Energiezustand um einen fluoreszenzfähigen Zustand. Fluoreszenzlicht ist im Hinblick auf die Detektion sehr gut handhabbar und es steht eine Vielzahl unterschiedlicher Substanzen zur Verfügung, mit denen die Probe markiert werden kann.

In einer konkreten Ausführungsform kann vorgesehen sein, dass die Detektionseinrichtung zum Nachweisen des von der Probe ausgehenden

Emissionslichts einen Detektor mit einem wellenlängenabhängigen Element umfasst. Das wellenlängenabhängige Element kann bspw. als Filter ausgeführt sein. Die Detektionseinrichtung kann auch mehrere Detektoren umfassen, wobei in besonders vorteilhafter Weise einer Substanz jeweils eine oder mehrere Detektoren der Detektionseinrichtung zuordenbar sind.

In weiter vorteilhafter Weise sind die Detektoren der Detektionseinrichtung einzeln und/oder gruppenweise abschaltbar. Auf diese Weise kann die Detektion von Emissionslicht einer Substanz verhindert werden, dass aus einer Anregung der Substanz mit Licht einer Abregungswellenlänge einer anderen Substanz resultiert. Die Abschaltung kann für die Dauer der Bestrahlung mit der Abregungswellenlänge vorgesehen sein. Alternativ oder zusätzlich kann die Detektion durch Vorschalten von Sperrfiltern und/oder Blenden vermieden werden.

Im Hinblick auf eine besonders umfassende Vermeidung von gegenseitigen Beeinflussungen der einzelnen Substanzen untereinander können die Substanzen und die Abregungswellenlängen in besonders vorteilhafter Weise derart ausgewählt werden, dass die Abregungswellenlängen der Substanzen jeweils außerhalb der Anregungsspektren der jeweils übrigen Substanzen liegen.

Im Hinblick auf eine hohe Flexibilität sowie eine hohe Benutzerfreundlichkeit kann vorgesehen sein, dass die Anregungs- und Abregungswellenlängen für jede Substanz frei gewählt werden können. Dies ermöglicht eine optimale Anregung und stimulierte Abregung der Substanzen. In besonders bevorzugter Weise wird ein Software-Interface zur Verfügung gestellt, über das ein Benutzer die Anregungs- und Abregungswellenlängen auswählen kann. Die Wellenlängen können bspw. benutzerseitig eingegeben bzw. frei eingestellt werden. Alternativ oder zusätzlich ist es möglich, einem Benutzer eine Tabelle zur Verfügung zu stellen, aus der Anregungs- und/oder Abregungswellenlängen ausgewählt werden können.

Es gibt nun verschiedene Möglichkeiten, die Lehre der vorliegenden Erfindung in vorteilhafter Weise auszugestalten und weiterzubilden. Dazu ist einerseits auf die den Patentansprüchen 1 und 8 jeweils nachgeordneten Patentansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen in schematischen Darstellungen
- Fig. 1: eine spektrale Verteilung eines Anregungs- und eines Emissionsspektrums eines einzelnen Fluoreszenzfarbstoffs,
- Fig. 2: die Spektren zweier Fluoreszenzfarbstoffe, wie sie gemäß einem Ausführungsbeispiel des erfindungsgemäßen Verfahrens zum Einsatz kommen,
- Fig. 3: die Spektren zweier Fluoreszenzfarbstoffe, wie sie gemäß einem nicht zu dieser Erfindung gehörenden Beispiel zum Einsatz kommen,
- Fig. 4: ein Ausführungsbeispiel einer erfindungsgemäßen Vorrichtung, die insbesondere im Zusammenhang mit den in Fig. 2 dargestellten spektralen Verhältnissen einsetzbar ist,
- Fig. 5: ein weiteres nicht zu dieser Erfindung gehörendes Beispiel einer Vorrichtung, die insbesondere im Zusammenhang mit den in Fig. 3 dargestellten spektralen Verhältnissen einsetzbar ist, und
- Fig. 6: ein Ausführungsbeispiel einer erfindungsgemäßen Vorrichtung mit getrennter Anregung und getrennter Abregung von zwei Fluoreszenzfarbstoffen.

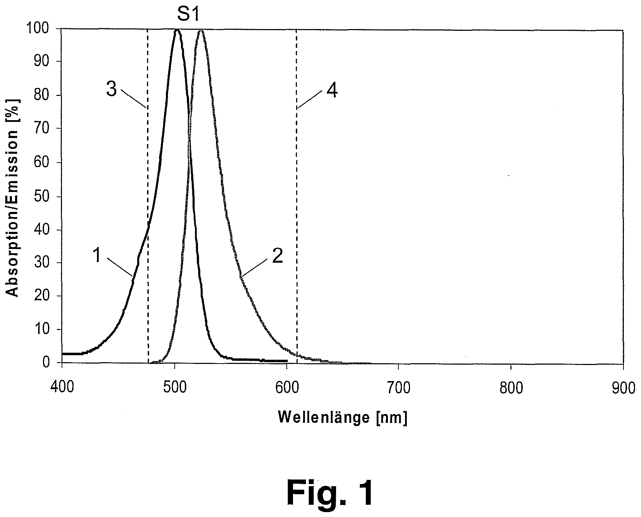

Fig. 1 zeigt die spektrale Verteilung eines Anregungsspektrums 1 und eines Emissionsspektrums 2 einer Substanz S1, wobei es sich hier konkret um einen Fluoreszenzfarbstoff handelt. Der Einsatz von Fluoreszenzfarbstoffen mit der gezeigten spektralen Verteilung wird entsprechend dem bekannten Stand der Technik typischerweise in der Einfarben-STED-Mikroskopie eingesetzt. Dabei wird eine zu untersuchende Probe mit einem kurzwelligen Laserpuls der Anregungswellenlänge 3 beleuchtet, wobei der Puls vorzugsweise aus einer gepulsten Laserdiode stammt. Anschließend wird eine Abregung der Fluoreszenzmoleküle am Anregungsfokusrand herbeigeführt, indem ein langwelliger Laserpuls mit der Abregungswellenlänge 4 eingestrahlt wird. Um eine Abregung der Fluoreszenzmoleküle ausschließlich am Fokusrand zu erreichen, wird die Abregungs-Punktbildfunktion speziell geformt, indem im Strahlengang des langwelligen Laserstrahls Phasenfilter eingesetzt werden, welche die Wellenfront des Abregungsstrahls ortsabhängig verändern. Die Abregung der Fluoreszenzmoleküle wird gesättigt durchgeführt, so dass nur noch in einem sehr kleinen zentralen Bereich Fluoreszenzmoleküle im angeregten Zustand verbleiben. Das aus einem spontanen Zerfall dieser verbliebenen angeregten Zustände resultierende Emissionslicht wird schließlich mit hoher Ortsauflösung detektiert.

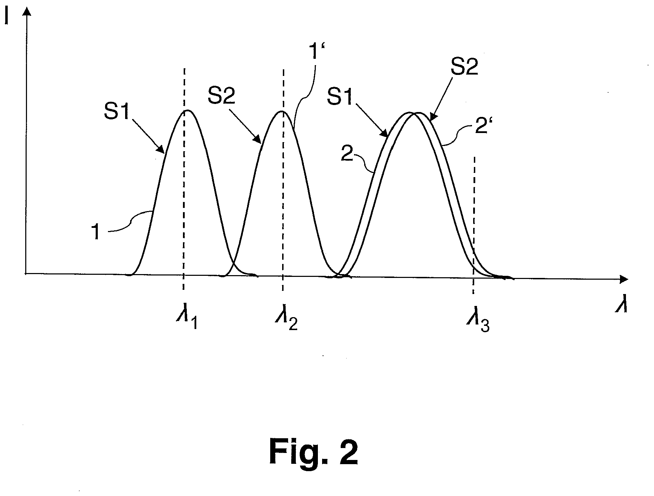

Fig. 2 zeigt - schematisch - die Anregungsspektren 1, 1' und die Emissionsspektren 2, 2' zweier Substanzen S1 und S2, wie sie gemäß einem ersten Ausführungsbeispiel des erfindungsgemäßen Verfahrens eingesetzt werden können. In dem dargestellten Ausführungsbeispiel werden als Substanzen S1, S2 zwei Fluoreszenzfarbstoffe verwendet, die mit unterschiedlichen Anregungswellenlängen angeregt, aber mit derselben Abregungswellenlänge stimuliert abgeregt werden.

Es ist möglich, eine Pulssequenz zu verwenden die folgende Abfolge besitzt: Puls der Wellenlänge λ₁, Puls der Wellenlänge λ₃, Puls der Wellenlänge λ₂, Puls der Wellenlänge λ₃, .... Eine derartig gewählte Pulsfolge erweist sich als besonders vorteilhaft, da hierfür Laserlichtquellen verwendet werden können, bei denen die Laserlichtquelle der Wellenlänge λ₃ die doppelte Pulswiederholfrequenz besitzt wie die Laserlichtquelle der Wellenlänge λ₁ und λ₂. Es können auch Mischungen der oben beschriebenen Pulssequenzen verwendet werden.

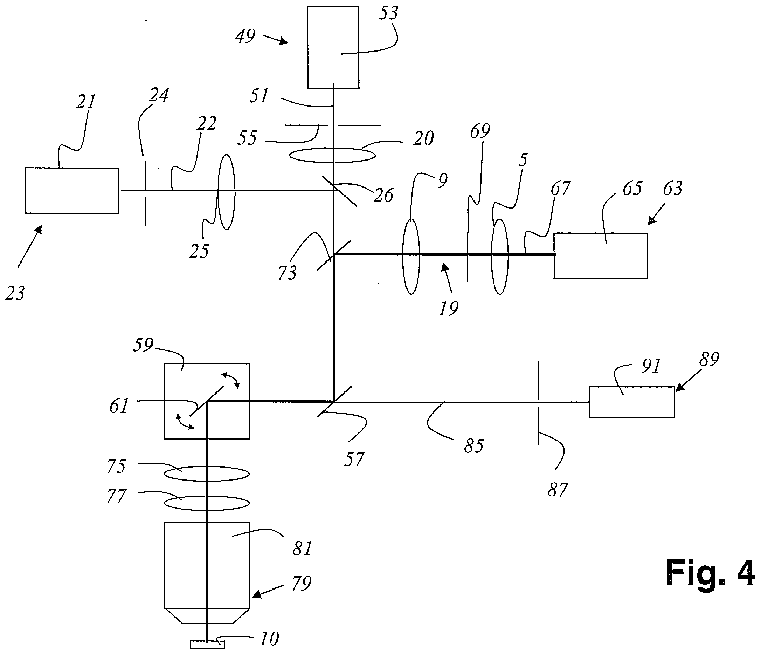

Eine sequentielle Aufnahme der verschiedenen Farbkanäle kann z.B. punktweise, zeilenweise, bildweise oder stapelweise erfolgen. Um die Farbstoffe zu trennen, wird die Pulsfolge in vorteilhafter Weise mit der Detektion synchronisiert, so dass das Licht, welches während des Einstrahlens der ersten Sequenz detektiert wird, dem einen Farbstoff und das Licht, welches während des Einstrahlens der zweiten Sequenz detektiert wird, dem zweiten Farbstoff zugeordnet werden kann. Die Laserpulse sind ebenfalls zueinander synchronisiert. Insbesondere sind die zu einem Farbstoff gehörigen Anregungs- und Abregungspulse zueinander synchronisiert. Die Pulsabstände sind in der ersten Sequenz und der zweiten Sequenz im Allgemeinen verschieden. Sind die Emissionsspektren der beiden Farbstoffe spektral unterschiedlich genug, dann kann das Fluoreszenzlicht auch durch ein wellenlängensensitives Element (Filter) getrennt werden. Dies ermöglicht dann z.B. die Verwendung der Pulsfolge Wellenlänge λ₁, Wellenlänge λ₂, Wellenlänge λ₃, usw. Die Laserlichtquelle, die zur Erzeugung der Abregungspulse mit der Wellenlänge λ₃ eingesetzt wird, muss - zur Erzielung einer Abregung der angeregten Zustände in Sättigung - eine hohe Laserleistung liefern und ist dementsprechend relativ teuer. Insofern ist der hier beschriebene Fall einer gemeinsamen Abregungswellenlänge für beiden Substanzen S1 und S2 besonders zu bevorzugen, da nur ein Abregungslaser benötigt wird. Fig. 4 zeigt einen möglichen Aufbau eines Rastermikroskops, das hinsichtlich der konstruktiven Ausgestaltung auf die hier beschriebene Situation abgestimmt ist.

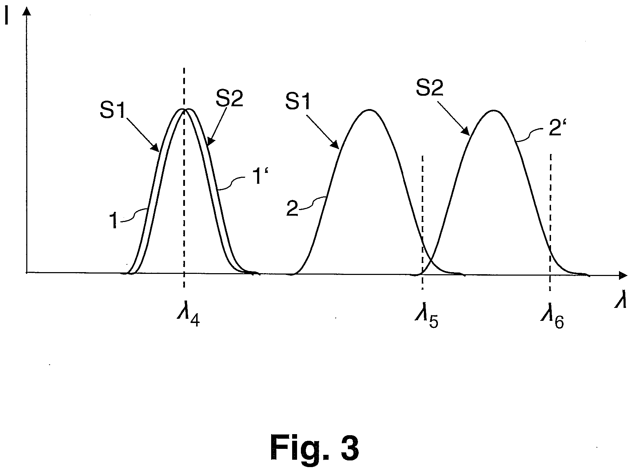

Im Rahmen eines nicht zu dieser Erfindung gehörenden Beispiels das in Fig. 3 dargestellt ist, werden als Substanzen S1, S2 Fluoreszenzfarbstoffe eingesetzt, die derart ausgewählt sind, dass ihre Anregungsspektren 1,1' eine Anregung mit jeweils derselben Wellenlänge λ₄ erlauben. Zur stimulierten Abregung werden hingegen unterschiedliche Wellenlängen λ₅ und λ₆ verwendet. Unterscheiden sich die Fluoreszenzspektren 2, 2' der beiden Farbstoffe ausreichend, dann kann die Fluoreszenz der beiden Farbstoffe durch ein wellenlängensensitives Element (Filter) getrennt werden und die Fluoreszenz der beiden Farbstoffe mit jeweils einem Detektor registriert werden.

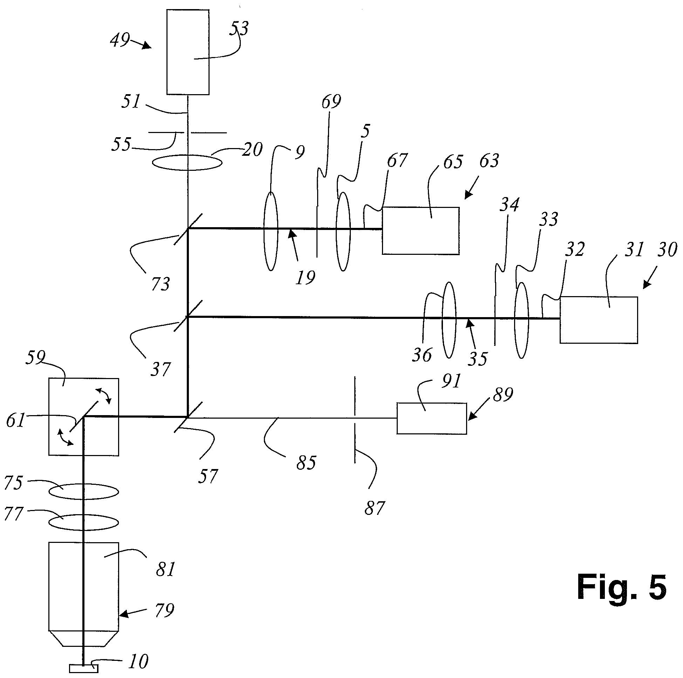

Da die Lebensdauern der angeregten Zustände der beiden Farbstoffe im Allgemeinen verschieden sind, ist es besonders vorteilhaft, einen unterschiedlichen Pulsabstand zwischen dem Anregungspuls und dem ersten Abregungspuls sowie dem Anregungspuls und dem zweiten Abregungspuls zu wählen. Die Pulse sind dabei zeitlich zueinander synchronisiert. Insbesondere sind die zu einem Farbstoff gehörigen Anregungs- und Abregungspulse zueinander synchronisiert. Zusätzlich können die Pulsfolgen mit der Detektion synchronisiert werden. Dies ist insbesondere dann sinnvoll, wenn sich die Fluoreszenzspektren 2, 2' der beiden Farbstoffe nur wenig voneinander unterscheiden. Bevorzugt wird die Pulsabfolge Anregungspuls (λ₄), erster Abregungspuls (λ₅), zweiter Abregungspuls (λ₆), usw. gewählt. Diese Sequenz wird mehrfach wiederholt, bis ausreichend Fluoreszenzlicht gesammelt wurde. Fig. 5 zeigt einen möglichen Aufbau eines Rastermikroskops, das hinsichtlich der konstruktiven Ausgestaltung auf die hier beschriebene Situation abgestimmt ist.

Fig. 4 zeigt - in einer schematischen Darstellung - ein Ausführungsbeispiel einer erfindungsgemäßen Vorrichtung zum hochaufgelösten optischen Abtasten einer Probe 10, die mit zwei (nicht näher dargestellten) Farbstoffen S1 und S2 markiert ist. Die als Rastermikroskop ausgeführte Vorrichtung ist an den Einsatz für Farbstoffe mit einer spektralen Charakteristik, wie sie in Fig. 2 dargestellt ist, angepasst. Das Rastermikroskop umfasst eine als Pulslaser 53 ausgeführte Lichtquelle 49, die ein erstes Anregungslichtbündel 51 emittiert. Das Anregungslichtbündel 51 mit einer Wellenlänge λ₁ zur Anregung des ersten Farbstoffs S1 trifft nach Passieren der Anregungslochblende 55 auf die Linsenanordnung 20 und wird durch die Linsenanordnung 20 kollimiert. Danach trifft das Anregungslichtbündel 51 auf die Strahlteiler 26 und 73 und den Hauptstrahlteiler 57, der das Anregungslichtbündel 51 zu der Strahlablenkeinrichtung 59 lenkt, die einen kardanisch aufgehängten Scanspiegel 61 umfasst.

Das Rastermikroskop umfasst ferner eine zweite Lichtquelle 21, die ein zweites Anregungslichtbündel 22 mit einer Wellenlänge λ₂ zur Anregung des zweiten Farbstoffs S2 emittiert. Die zweite Lichtquelle 21 ist ebenfalls als Pulslaser 23 ausgeführt. Das Anregungslichtbündel 22 trifft nach Passieren der Anregungslochblende 24 auf die Optik 25 und wird durch die Optik 25 kollimiert und mittels des optischen Elements 26 mit dem ersten Anregungslichtbündel 51 vereint.

Das Rastermikroskop umfasst schließlich eine dritte Lichtquelle 63, die als Pulslaser 65 ausgebildet ist, auf den die erste Lichtquelle 49 und die zweite Lichtquelle 21 synchronisiert sind. Die dritte Lichtquelle 63 emittiert ein Lichtbündel 19, das im Weiteren als Stimulationslichtbündel 67 bezeichnet ist. Das Stimulationslichtbündel 67 umfasst Licht der Wellenlänge λ₃, mit dem sowohl der Farbstoff S1 als auch der Farbstoff S2 stimuliert abgeregt werden. Das Stimulationslichtbündel 67 wird durch eine Optik 5 kollimiert und trifft auf einen Phasenfilter 69. Das von dem Phasenfilter 69 kommende Stimulationslichtbündel 67 trifft auf den dichroitischen Strahlteiler 73. Der Phasenfilter 69 wird durch die Optik 9 in die Pupille des Objektivs abgebildet. Der dichroitische Strahlteiler 73 vereinigt die beiden bereits zusammengeführten Anregungslichtbündel 51 und 22 und das Stimulationslichtbündel 67 auf einen gemeinsamen Strahlengang. Auch das Stimulationslichtbündel 67 wird von dem Hauptstrahlteiler 57 zur Strahlablenkeinrichtung 59 gelenkt. Die Strahlablenkeinrichtung 59 führt das die Anregungslichtbündel 51 und 22 sowie das Stimulationslichtbündel 67 gemeinsam durch die Scanoptik 75, die Tubusoptik 77 sowie die fokussierende Optik 79, nämlich das Mikroskopobjektiv 81, über bzw. durch die Probe 10.

Der Fokus der Anregungslichtbündel 51 und 22 regt die Probe 10 in einem Probenpunkt optisch an, während der Fokus des Stimulationslichtbündels 67 einen Außenbereich des angeregten Probenbereichs stimuliert abregt. Hierzu ist der Fokus des Stimulationslichtbündels 67 geeignet, nämlich als innenhohler Fokus ausgebildet. Das Phasenfilter 69 ist in dieser Variante in einer zur Fokalebene des Mikroskopobjektivs 81 konjugierten Ebene (Fourierebene) angeordnet.

Das von der Probe 10 ausgehende Detektionslicht 85 gelangt durch das Mikroskopobjektiv 81, die Tubusoptik 77, die Scanoptik 75 zur Strahlablenkeinrichtung 59, von dieser zum Hauptstrahlteiler 57, passiert diesen und die nachfolgende Detektionslochblende 87 und gelangt schließlich zu der Detektionseinrichtung 89, der als Multibanddetektor 91 ausgeführt ist. Der Detektor 91 erzeugt elektrische, zur Lichtleistung des Detektionslichts 85 proportionale Signale, die zur Bilddarstellung gemeinsam mit den Positionssignalen der Strahlablenkeinrichtung 59 an eine nicht gezeigte Verarbeitungseinheit weitergegeben werden.

Fig. 5 zeigt ein weiteres nicht zu dieser Erfindung gehörendes Beispiel eines Rastermikroskops, für zwei Farbstoffe S1 und S2, das an eine spektrale Charakteristik der Farbstoffe, wie sie in Fig. 3 dargestellt ist, angepasst ist. Das in Fig. 5 dargestellte Rastermikroskop ähnelt weitestgehend dem in Fig. 4 dargestellten Rastermikroskop. Gleiche Bauteile sind mit denselben Bezugszeichen gekennzeichnet. Im Unterschied zu dem Rastermikroskop gemäß Fig. 4 weist das hier dargestellte Rastermikroskop nur eine Lichtquelle 49 zur Erzeugung eines Anregungslichtbündels 51 auf. Das Anregungslichtbündel 51 umfasst Licht mit der Wellenlänge λ₄, das sowohl zur Anregung des ersten Farbstoffs S1 als auch zur Anregung des zweiten Farbstoffs S2 dient.

Wie das Rastermikroskop gemäß Fig. 4 umfasst auch das Rastermikroskop gemäß Fig. 5 eine Lichtquelle 63, die als Pulslaser 65 ausgebildet ist, welcher auf die erste Lichtquelle 49 synchronisiert ist. Die zweite Lichtquelle 63 emittiert ein Lichtbündel 19, das im Weiteren als Stimulationslichtbündel 67 bezeichnet ist. Das Stimulationslichtbündel 67 umfasst in diesem Fall Licht der Wellenlänge λ₅, mit dem der erste Farbstoff S1 stimuliert abgeregt wird. Das Stimulationslichtbündel 67 wird durch eine Optik 5 kollimiert und trifft auf einen Phasenfilter 69.

Zusätzlich umfasst das Rastermikroskop eine dritte Lichtquelle 30, die als Pulslaser 31 ausgebildet ist, auf den die Lichtquelle 49 synchronisiert ist. Die dritte Lichtquelle 30 emittiert ein Lichtbündel 35, das im Weiteren als Stimulationslichtbündel 32 bezeichnet ist. Das Stimulationslichtbündel 32 umfasst Licht der Wellenlänge λ₆, mit dem der zweite Farbstoff S2 stimuliert abgeregt wird. Das Stimulationslichtbündel 32 wird durch eine Optik 33 kollimiert und trifft auf einen Phasenfilter 34. Die von den Phasenfiltern 69 und 34 kommende Stimulationslichtbündel 67 und 32 werden von den dichroitischen Strahlteilern 73 und 37 umgelenkt. Die Phasenfilter 69 und 34 werden durch die Optiken 9 und 36 in die Pupille des Objektivs abgebildet. Die Strahlenbündel werden von dem Hauptstrahlteiler 57 zur Strahlablenkeinrichtung 59 gelenkt. Die Strahlablenkeinrichtung 59 führt das Anregungslichtbündel 51 und die Stimulationslichtbündel 67 und 32 gemeinsam durch die Scanoptik 75, die Tubusoptik 77 sowie die fokussierende Optik 79, nämlich das Mikroskopobjektiv 81, über bzw. durch die Probe 10.

Hinsichtlich der Fokusse des Anregungslichtbündels 51 und der Stimulationslichtbündel 67 und 32 sowie hinsichtlich des Nachweises des Detektionslichts 85 gilt das Gleiche wie in Zusammenhang mit Fig. 4 bereits oben ausgeführt.

Durch Justage der Optiken 20, 25, 5 und 33 in axialer Richtung kann die chromatische Längsabberation des Objektivs 81 ausgeglichen werden und die Foki der Anregung und Abregung können übereinander gelegt werden.

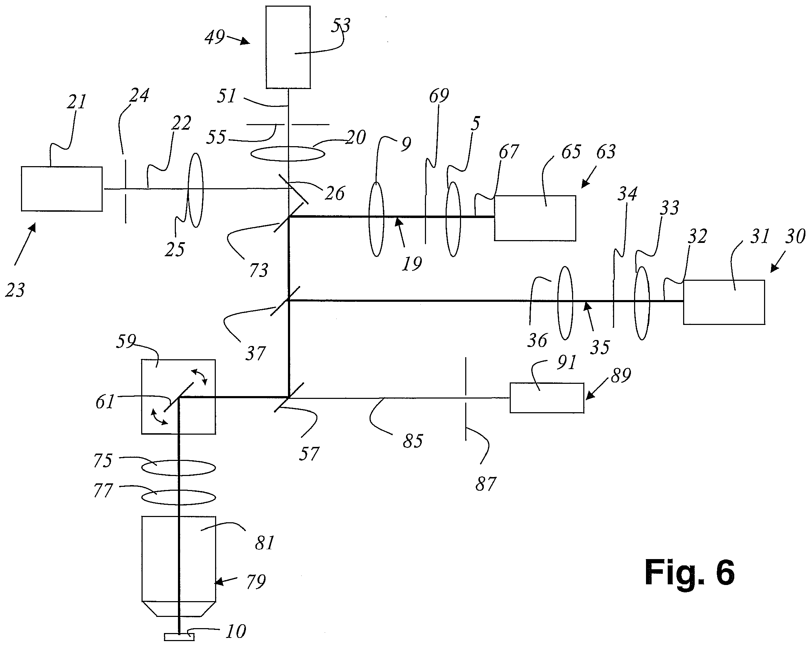

Fig. 6 zeigt schließlich ein Ausführungsbeispiel eines erfindungsgemäßen Rastermikroskops, dessen Aufbau weitestgehend dem Aufbau der in den Fig. 4 und 5 gezeigten Rastermikroskope entspricht. Der einzige Unterschied besteht darin, dass sowohl zur Anregung der beiden Substanzen S1 und S2 zwei separate Lichtquellen 49 und 23, als auch zur stimulierten Abregung zwei separate Lichtquellen 63 und 30 vorgesehen sind.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Patentansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

## Patentansprüche

1. Verfahren zum hochaufgelösten optischen Abtasten einer Probe, vorzugsweise unter Verwendung eines Laser-Raster-Fluoreszenzmikroskops,
wobei die Probe (10) eine Substanz (S1) umfasst, die in unterschiedliche Energiezustände - erster Zustand Z1 und zweiter Zustand Z2 - versetzbar ist, wobei sich der erste Zustand Z1 und der zweite Zustand Z2 in mindestens einer optischen Eigenschaft voneinander unterscheiden,
wobei die Probe (10) zur bereichsweisen Erzeugung des ersten Zustandes Z1 der Substanz (S1) mit fokussiertem und gepulstem Licht einer Wellenlänge des Anregungsspektrums (1) der Substanz (S1) beleuchtet wird, wobei die Probe (10) zur Erzeugung des zweiten Zustandes Z2 der Substanz (S1) in einem Fokusrandbereich der Anregung mit gepulstem Licht einer geeigneten Abregungswellenlänge beleuchtet wird, und
wobei von der Probe (10) ausgehendes Emissionslicht (85), das aus einem Zerfall verbliebener erster Zustände Z1 resultiert, mittels einer Detektionseinrichtung (89) nachgewiesen wird,
wobei die Probe (10) mindestens eine weitere Substanz (S2) umfasst, die in einen ersten Zustand Z1' und in einen zweiten Zustand Z2' überführbar ist,
wobei sich die Substanzen (S1, S2) in mindestens einer Eigenschaft, nämlich hinsichtlich ihrer Anregungsspektren, voneinander unterscheiden und dass die Substanzen (S1, S2) in mindestens einer anderen Eigenschaft, nämlich hinsichtlich ihrer Emissionsspektren zumindest teilweise übereinstimmen, wobei die Substanzen (S1, S2) mit gepulstem Licht unterschiedlicher Anregungswellenlängen angeregt, aber mit gepulstem Licht derselben Abregungswellenlänge stimuliert abgeregt werden, **dadurch gekennzeichnet, dass**
eine Pulssequenz mehrfach wiederholt wird, die die Abfolge
• Laserpuls der Wellenlänge (λ1) des Anregungsspektrums (1) der Substanz (S1),
• Laserpuls der Abregungswellenlänge (λ3),
• Laserpuls der Wellenlänge (λ2) des Anregungsspektrums derweiteren Substanz (S2),
• Laserpuls der Abregungswellenlänge (λ3),
oder die Abfolge
• Laserpuls der Wellenlänge (λ1) des Anregungsspektrums (1) der Substanz (S1),
• Laserpuls einer Wellenlänge (λ2) des Anregungsspektrums der weiteren Substanz (S2),
• Laserpuls der Abregungswellenlänge (λ3)
aufweist.

2. Verfahren nach Anspruch 1, **dadurch gekennzeichnet, dass** die Substanzen (S1, S2) derart ausgewählt sind, dass sich die Anregungsspektren (1, 1') der Substanzen (S1, S2) einander teilweise überlappen.

3. Verfahren nach Anspruch 1 oder2, **dadurch gekennzeichnet, dass** eine sequentielle Aufnahme der einzelnen Substanzen (S1, S2) punktweise, zeilenweise, bildweise oder stapelweise vorgenommen wird.

4. Verfahren nach einem der Ansprüche 1 bis 3, **dadurch gekennzeichnet, dass** für jede Substanz (S1, S2) ein eigener Detektor verwendet wird.

5. Verfahren nach einem der Ansprüche 1 bis 4, **dadurch gekennzeichnet, dass** während der Beleuchtung der Probe (10) mit der Abregungswellenlänge die Detektion von Emissionslicht (85) einer der Substanzen (S1, S2) unterdrückt wird, wenn deren Anregungsspektrum (1, 1 ') die eingestrahlte Abregungswellenlänge umfasst.

6. Verfahren nach Anspruch 5, **dadurch gekennzeichnet, dass** die Detektion des Emissionslichts (85) der Substanz (S2, S1), deren Anregungsspektrum (1, 1 ') die eingestrahlte Abregungswellenlänge umfasst, mittels eines wellenlängenabhängigen Elements, beispielsweise eines Filters, und/oder durch Abschalten des entsprechenden Detektors und/oder durch Vorschalten eines Sperrfilters oder einer Blende unterdrückt wird.

7. Verfahren nach einem der Ansprüche 1 bis 5, **dadurch gekennzeichnet, dass** die Substanzen (S1, S2) derart ausgewählt werden, dass die Abregungswellenlänge jeweils außerhalb der Anregungsspektren (1, 1') der übrigen Substanzen (S1, S2) liegt.

8. Vorrichtung, insbesondere Laser-Rastermikroskop, die ausgebildet ist zum Durchführen eines Verfahrens nach einem der Ansprüche 1 bis 7 zum hochaufgelösten optischen Abtasten einer Probe (10), wobei die Probe eine Substanz (S1) umfasst, die in unterschiedliche Energiezustände - erster Zustand Z1 und zweiter Zustand Z2 - versetzbar ist, wobei sich der erste Zustand Z1 und der zweite Zustand Z2 in mindestens einer optischen Eigenschaft voneinander unterscheiden,
mit einer Steuerungseinrichtung und
mit mindestens einer Lichtquelle (49, 23, 63, 30), die zur Beleuchtung der Probe (10) mit Licht einer Wellenlänge des Anregungsspektrums der Substanz (S1) zur bereichsweisen Erzeugung des ersten Zustandes Z1 der Substanz (S1) sowie zur fokussierten Beleuchtung der Probe (10) mit Licht einer geeigneten Abregungswellenlänge zur Erzeugung des zweiten Zustandes Z2 der Substanz (S1) in einem Fokusrandbereich der Anregung ausgebildet ist, und mit einer Detektionseinrichtung (89), die zum Nachweis des von der Probe (10) ausgehenden Emissionslichts (85), das aus einem Zerfall verbliebener erster Zustände Z1 resultiert, ausgebildet ist,
wobei die Vorrichtung dazu ausgebildet ist, die Schritte der Anregung und der Abregung und der Detektion für mindestens eine weitere Substanz (S2), die von der Probe (10) umfasst ist und die in einen ersten Zustand Z1' und in einen zweiten Zustand Z2' überführbar ist, durchzuführen, wobei sich die Substanzen (S1, S2) in mindestens einer Eigenschaft, nämlich hinsichtlich ihrer Anregungsspektren, voneinander unterscheiden und in mindestens einer anderen Eigenschaft, nämlich hinsichtlich ihrer Emissionsspektren zumindest teilweise übereinstimmen, und
dass die Vorrichtung dazu ausgebildet ist, die Substanzen (S1, S2) mit Licht unterschiedlicher Anregungswellenlängen anzuregen, aber mit Licht derselben Abregungswellenlänge abzuregen, und dass
die wenigstens eine Lichtquelle (49, 23, 63, 30) im Pulsbetreib arbeitet, **dadurch gekennzeichnet, dass** die Steuerungseinrichtung dazu ausgebildet ist, die wenigstens eine Lichtquelle (49, 23, 63, 30) anzusteuern, um eine Pulssequenz mehrfach zu wiederholen, die die Abfolge
i. Laserpuls der Wellenlänge (λ1) des Anregungsspektrums (1) der Substanz (S1),
ii. Laserpuls der Abregungswellenlänge (λ3),
iii. Laserpuls der Wellenlänge (λ2) des Anregungsspektrums derweiteren Substanz (S2),
iv. Laserpuls der Abregungswellenlänge (λ3),
oder die Abfolge
i. Laserpuls der Wellenlänge (λ1) des Anregungsspektrums (1) der Substanz (S1),
ii. Laserpuls einer Wellenlänge (λ2) des Anregungsspektrums derweiteren Substanz (S2),
iii. Laserpuls der Abregungswellenlänge (λ3)
aufweist.

9. Vorrichtung nach Anspruch 8, **dadurch gekennzeichnet, dass** die Detektionseinrichtung (89) mehrere Detektoren umfasst und jeder Substanz (S1, S2) wenigstens einer der Detektoren zugeordnet ist.

## Claims

1. Method for high-resolution optical scanning of a sample, preferably using a laser scanning fluorescence microscope,
wherein the sample (10) comprises a substance (S1) which is able to be brought into different energy states - first state Z1 and second state Z2, wherein the first state Z1 and the second state Z2 differ from each other in at least one optical property,
wherein the sample (10) is illuminated with focused and pulsed light of a wavelength of the excitation spectrum (1) of the substance (S1) to regionally produce the first state Z1 of the substance (S1), wherein the sample (10) is illuminated with pulsed light of a suitable deexcitation wavelength to produce the second state Z2 of the substance (S1) in a focus peripheral region of the excitation, and
wherein emission light (85) which emanates from the sample (10) and is the result of the decay of remaining first states Z1 is detected by means of a detection device (89),
wherein the sample (10) comprises at least one further substance (S2), which is able to be brought into a first state Z1' and into a second state Z2',
wherein the substances (S1, S2) differ from each other in at least one property, specifically with respect to their excitation spectra, and that the substances (S1, S2) at least partially match in at least one other property, specifically with respect to their emission spectra,
wherein the substances (S1, S2) are excited with pulsed light of different excitation wavelengths but are deexcited stimulated with pulsed light of the same deexcitation wavelength, **characterized in that** a pulse sequence is repeated multiple times which includes the succession
• laser pulse of the wavelength (λ1) of the excitation spectrum (1) of the substance (S1),
• laser pulse of the deexcitation wavelength (λ3),
• laser pulse of the wavelength (λ2) of the excitation spectrum of the further substance (S2),
• laser pulse of the deexcitation wavelength (λ3),
or being
• laser pulse of the wavelength (λ1) of the excitation spectrum (1) of the substance (S1),
• laser pulse of a wavelength (λ2) of the excitation spectrum of the further substance (S2),
• laser pulse of the deexcitation wavelength (λ3).

2. Method according to Claim 1, **characterized in that** the substances (S1, S2) are selected such that the excitation spectra (1, 1') of the substances (S1, S2) partially overlap.

3. Method according to Claim 1 or 2, **characterized in that** the individual substances (S1, S2) are sequentially recorded in a point-wise, line-wise, image-wise or stack-wise manner.

4. Method according to any of Claims 1 to 3, **characterized in that** a separate detector is used for each substance (S1, S2).

5. Method according to any of Claims 1 to 4, **characterized in that**, during the illumination of the sample (10) with the deexcitation wavelength, the detection of emission light (85) of one of the substances (S1, S2) is suppressed if its excitation spectrum (1, 1') comprises the incoming deexcitation wavelength.

6. Method according to Claim 5, **characterized in that** the detection of the emission light (85) of the substance (S2, S1) whose excitation spectrum (1, 1') comprises the incoming deexcitation wavelength is suppressed by means of a wavelength-dependent element, for example a filter, and/or by switching off the corresponding detector and/or by connecting a barrier filter or a stop upstream.

7. Method according to any of Claims 1 to 5, **characterized in that** the substances (S1, S2) are selected such that each deexcitation wavelength lies outside the excitation spectra (1, 1') of the remaining substances (S1, S2).

8. Apparatus, in particular laser scanning microscope, which is configured for carrying out a method according to any of Claims 1 to 7 for high-resolution optical scanning of a sample (10), wherein the sample comprises a substance (S1) which is able to be brought into different energy states - first state Z1 and second state Z2, wherein the first state Z1 and the second state Z2 differ from each other in at least one optical property,
having a control device and
having at least one light source (49, 23, 63, 30), which is configured for illuminating the sample (10) with light of a wavelength of the excitation spectrum of the substance (S1) to regionally produce the first state Z1 of the substance (S1) and for illuminating the sample (10) in a focused manner with light of a suitable deexcitation wavelength to produce the second state Z2 of the substance (S1) in a focus peripheral region of the excitation, and having
a detection device (89) configured for detecting the emission light (85) which emanates from the sample (10) and is the result of the decay of remaining first states Z1,
wherein the apparatus is configured to carry out the steps of the excitation and deexcitation and the detection for at least one further substance (S2) comprised by the sample (10), which further substance (S2) is able to be brought into a first state Z1' and into a second state Z2', wherein the substances (S1, S2) differ from each other in at least one property, specifically with respect to their excitation spectra, and at least partially match in at least one other property, specifically with respect to their emission spectra, and
that the apparatus is configured to excite the substances (S1, S2) with light of different excitation wavelengths but deexcite them with light of the same deexcitation wavelength, and that
the at least one light source (49, 23, 63, 30) operates in pulsed operation, **characterized in that** the control device is configured to control the at least one light source (49, 23, 63, 30) to repeat a pulse sequence multiple times which includes the succession
i. laser pulse of the wavelength (λ1) of the excitation spectrum (1) of the substance (S1),
ii. laser pulse of the deexcitation wavelength (λ3),
iii. laser pulse of the wavelength (λ2) of the excitation spectrum of the further substance (S2),
iv. laser pulse of the deexcitation wavelength (λ3),
or being
i. laser pulse of the wavelength (λ1) of the excitation spectrum (1) of the substance (S1),
ii. laser pulse of a wavelength (λ2) of the excitation spectrum of the further substance (S2),
iii. laser pulse of the deexcitation wavelength (λ3).

9. Apparatus according to Claim 8, **characterized in that** the detection device (89) comprises a plurality of detectors and each substance (S1, S2) is assigned at least one of the detectors.

## Revendications

1. Procédé de balayage optique à haute résolution d'un échantillon, de préférence à l'aide d'un microscope à fluorescence à balayage laser, l'échantillon (10) comprenant une substance (S1) qui peut être déplacée dans des états d'énergie différents - premier état Z1 et deuxième état Z2 - le premier état Z1 et le deuxième état Z2 différant l'un de l'autre par au moins une propriété optique,
l'échantillon (10) étant éclairé avec une lumière focalisée et pulsée d'une longueur d'onde du spectre d'excitation (1) de la substance (S1) afin de générer par zones le premier état Z1 de la substance (S1), l'échantillon (10) étant éclairé avec une lumière pulsée d'une longueur d'onde de désexcitation appropriée dans une zone de bord de focalisation de l'excitation afin de générer le deuxième état Z2 de la substance (S1), et
la lumière d'émission (85) qui émane de l'échantillon (10) et qui résulte d'une décroissance de premiers états restants Z1 étant détectée au moyen d'une unité de détection (89),
l'échantillon (10) comprenant au moins une autre substance (S2) qui peut être passée dans un premier état Z1' et dans un deuxième état Z2',
les substances (S1, S2) différant par au moins une propriété, à savoir quant à leurs spectres d'excitation, et
les substances (S1, S2) concordant au moins partiellement par au moins une autre propriété, notamment quant à leurs spectres d'émission,
les substances (S1, S2) étant excitées avec une lumière pulsée de différentes longueurs d'onde d'excitation, mais étant désexcitées lorsqu'elles sont stimulées avec une lumière pulsée de la même longueur d'onde de désexcitation, **caractérisé en ce que**
une séquence d'impulsions est répétée plusieurs fois qui comporte la succession
• d'une impulsion laser de la longueur d'onde (λ1) du spectre d'excitation (1) de la substance (S1),
• d'une impulsion laser de longueur d'onde de désexcitation (λ3),
• d'une impulsion laser de la longueur d'onde (λ2) du spectre d'excitation de l'autre substance (S2),
• d'une impulsion laser de longueur d'onde de désexcitation (λ3),
ou la succession
• d'une impulsion laser de la longueur d'onde (λ1) du spectre d'excitation (1) de la substance (S1),
• d'une impulsion laser d'une longueur d'onde (λ2) du spectre d'excitation de l'autre substance (S2),
• d'une impulsion laser de longueur d'onde de désexcitation (λ3).

2. Procédé selon la revendication 1, **caractérisé en ce que** les substances (S1, S2) sont choisies de manière à ce que les spectres d'excitation (1, 1') des substances (S1, S2) se recouvrent partiellement.

3. Procédé selon la revendication 1 ou 2, **caractérisé en ce que** les substances individuelles (S1, S2) sont enregistrées séquentiellement point par point, ligne par ligne, image par image ou de manière empilée.

4. Procédé selon l'une des revendications 1 à 3, **caractérisé en ce qu'**un détecteur propre est utilisé pour chaque substance (S1, S2).

5. Procédé selon l'une des revendications 1 à 4, **caractérisé en ce que**, lorsque l'échantillon (10) est éclairé avec la longueur d'onde de désexcitation, la détection de la lumière d'émission (85) de l'une des substances (S1, S2) est supprimée si son spectre d'excitation (1, 1') comprend la longueur d'onde de désexcitation.

6. Procédé selon la revendication 5, **caractérisé en ce que** la détection de la lumière d'émission (85) de la substance (S2, S1), dont le spectre d'excitation (1, 1') comprend la longueur d'onde de désexcitation émise, est supprimée au moyen d'un élément dépendant de la longueur d'onde, par exemple un filtre, et/ou par désactivation du détecteur correspondant et/ou par insertion d'un filtre d'arrêt ou d'un écran.

7. Procédé selon l'une des revendications 1 à 5, **caractérisé en ce que** les substances (S1, S2) sont choisies de manière à ce que la longueur d'onde de désexcitation soit en dehors des spectres d'excitation (1, 1') des autres substances (S1, S2).

8. Dispositif, notamment microscope à balayage laser, qui est conçu pour mettre en œuvre un procédé selon l'une des revendications 1 à 7 de balayage optique à haute résolution d'un échantillon (10), l'échantillon comprenant une substance (S1) qui peut être déplacée dans des états d'énergie différents - premier état Z1 et deuxième état Z2 - le premier état Z1 et le deuxième état Z2 différant l'un de l'autre par au moins une propriété optique,
ledit dispositif comprenant
une unité de commande et
au moins une source lumineuse (49, 23, 63, 30) qui est conçue pour éclairer l'échantillon (10) avec une lumière d'une longueur d'onde du spectre d'excitation de la substance (S1) afin de générer par zones le premier état Z1 de la substance (S1) et pour éclairer de manière focalisée l'échantillon (10) avec une lumière d'une longueur d'onde d'excitation appropriée afin de générer le deuxième état Z2 de la substance (S1) dans une zone de bord de focalisation de l'excitation, et
une unité de détection (89) qui est conçue pour détecter la lumière d'émission (85), qui émane de l'échantillon (10) et qui résulte d'une désintégration de premiers états Z1 restants,
le dispositif étant conçu pour réaliser les étapes d'excitation et de désexcitation et de détection d'au moins une autre substance (S2) qui est comprise dans l'échantillon (10) et qui peut être passée dans un premier état Z1' et dans un deuxième état Z2', les substances (S1, S2) différant l'une de l'autre par au moins une propriété, à savoir quant à leurs spectres d'excitation, et concordant au moins partiellement par au moins une autre propriété, à savoir quant à leurs spectres d'émission, et
le dispositif étant conçu pour exciter les substances (S1, S2) avec une lumière de longueurs d'onde d'excitation différentes, mais pour les désexciter avec une lumière de même longueur d'onde de désexcitation, et l'au moins une source de lumière (49, 23, 63, 30) fonctionnant en mode impulsionnel, **caractérisé en ce que** l'unité de commande est conçue pour commander l'au moins une source de lumière (49, 23, 63, 30) afin de répéter plusieurs fois une séquence d'impulsions qui comporte la succession
i. d'une impulsion laser de la longueur d'onde (λ1) du spectre d'excitation (1) de la substance (S1),
ii. d'une impulsion laser de longueur d'onde de désexcitation (λ3),
iii. d'une impulsion laser de la longueur d'onde (λ2) du spectre d'excitation de l'autre substance (S2),
iv. d'une impulsion laser de longueur d'onde de désexcitation (λ3),
ou la succession
i. d'une impulsion laser de la longueur d'onde (λ1) du spectre d'excitation (1) de la substance (S1),
ii. d'une impulsion laser d'une longueur d'onde (λ2) du spectre d'excitation de l'autre substance (S2),
iii. d'une impulsion laser de longueur d'onde de désexcitation (λ3) .

9. Dispositif selon la revendication 8, **caractérisé en ce que** l'unité de détection (89) comprend une pluralité de détecteurs et au moins un des détecteurs est associé à chaque substance (S1, S2).
